# FASCICULE DE BREVET EUROPEEN

(11) **EP 2 627 528 B1**
(45) Date de publication et mention de la délivrance du brevet: **09.05.2018**
(21) Numéro de dépôt: 11832096.9
(22) Date de dépôt: 11.10.2011
(51) Int. Cl.: B60K 1/04, B62D 21/15

(54) **STRUCTURE DESTINÉE À RECEVOIR UNE BATTERIE ÉLECTRIQUE D'ALIMENTATION D'UN MOTEUR ÉLECTRIQUE D'ENTRAÎNEMENT D'UN VÉHICULE AUTOMOBILE**
STRUKTUR ZUM HALTEN EINER ELEKTROBATTERIE ZUR STROMVERSORGUNG EINES ELEKTROMOTORS ZUM ANTREIBEN EINES MOTORFAHRZEUGS
STRUCTURE INTENDED TO HOLD AN ELECTRIC BATTERY FOR POWERING AN ELECTRIC MOTOR FOR DRIVING A MOTOR VEHICLE

(30) Priorité: 13.10.2010 FR 1058325
(43) Date de publication de la demande: 21.08.2013
(73) Titulaire: Renault S.A.S., 92100 Boulogne-Billancourt (FR)
(72) Inventeur: LE JAOUEN, Guillaume, F-78180 Montigny le Bretonneux (FR); MAHE, Cyrille, F-91330 Yerres (FR); LE DUC, Francois, F-92140 Clamart (FR)
(86) Numéro de dépôt international: PCT/FR2011/052368
(87) Numéro de publication internationale: WO 2012/049418

(56) Documents cités:
- WO-A1-2005/084985
- WO-A1-2009/139229
- DE-T5-112008 000 351

## Description

La présente invention se rapporte à une structure destinée à recevoir une batterie électrique, notamment une batterie électrique d'alimentation d'un moteur électrique d'entraînement d'un véhicule automobile. Elle se rapporte aussi à un châssis d'un véhicule automobile présentant une telle structure. Elle se rapporte enfin à un véhicule automobile comprenant une telle structure ou un tel châssis. Une telle structure est connue du WO-A-2009/139229. Certains véhicules automobiles, comme les véhicules électriques ou hybrides, comprennent une batterie électrique d'alimentation d'un moteur électrique d'entraînement. Par souci de sécurité, il est nécessaire d'assurer l'intégrité de la batterie électrique d'alimentation du moteur dans différentes configurations de choc :
- Choc frontal ;
- Choc arrière ;
- Choc latéral contre un poteau.

L'objectif est d'éviter, lors d'un choc ou consécutivement à un choc, toute électrocution et/ou tout court-circuit susceptible de générer un incendie. Pour ce faire, il est nécessaire de garantir l'intégrité du carter de la batterie et d'éviter toute possibilité de contact de ses éléments internes lors d'un choc. Une fissure du carter de la batterie est autorisée mais elle ne doit pas dépasser une certaine dimension garantissant l'impossibilité pour un utilisateur d'y passer un doigt.

L'architecture des véhicules électriques est spécifique. La batterie électrique n'est pas forcément implantée en lieu et place du réservoir d'un véhicule thermique classique. Dans certains cas, son implantation, entre les deux essieux du véhicule, la rend vulnérable au choc notamment au choc latéral normalisé contre un poteau.

Selon certaines architectures, la batterie électrique est disposée au niveau du train arrière ou du train avant (en général, en lieu et place du réservoir de carburant d'un véhicule thermique). Ce positionnement permet de bénéficier de la raideur transversale du train et d'assurer l'intégrité de la batterie lors d'un choc latéral.

Le but de l'invention est de fournir une structure destinée à recevoir une batterie électrique, remédiant aux inconvénients mentionnés précédemment et améliorant les structures connues de l'art antérieur. En particulier, l'invention propose une structure simple, fiable et robuste permettant d'assurer l'intégrité de la batterie électrique lors d'un choc latéral contre le véhicule automobile.

Selon l'invention, la structure est destinée à recevoir une batterie électrique (3) d'alimentation d'un moteur électrique d'un véhicule automobile, la structure comprenant un élément rigide (7, 6a, 6b) au-dessus et/ou au-dessous duquel la batterie est destinée à être disposée, l'élément rigide incluant plusieurs longerons (6a, 6b) du véhicule s'étendant longitudinalement au véhicule et reliés l'un à l'autre par plusieurs traverses (7), la structure étant caractérisée en ce qu'elle comprend, latéralement de part et d'autre des longerons, des éléments d'absorption d'énergie comprenant des organes déformables (5a, 5b) s'étendant au moins sensiblement selon une direction latérale, ainsi que deux poutres (4a, 4b) disposées au moins sensiblement longitudinalement de part et d'autre de l'élément rigide et des organes déformables, les organes déformables reliant mécaniquement les longerons aux poutres. La surface de la projection verticale de la batterie peut être incluse ou au moins sensiblement incluse dans la surface de la projection verticale de l'élément rigide.

Selon l'invention, un châssis de véhicule automobile comprend une structure définie précédemment.

Selon l'invention, un véhicule automobile hybride ou électrique, notamment quadricycle électrique, comprend une structure définie précédemment.

Les dessins annexés représentent, à titre d'exemple, un châssis de véhicule automobile comprenant un mode d'exécution d'une structure selon l'invention.
La figure 1 est une vue en perspective d'un châssis de véhicule automobile comprenant un mode de réalisation de la structure selon invention.
La figure 2 est une vue en coupe au niveau de la section en traits pointillés de la figure 1 et en perspective du châssis de véhicule automobile comprenant le mode de réalisation de structure selon invention.

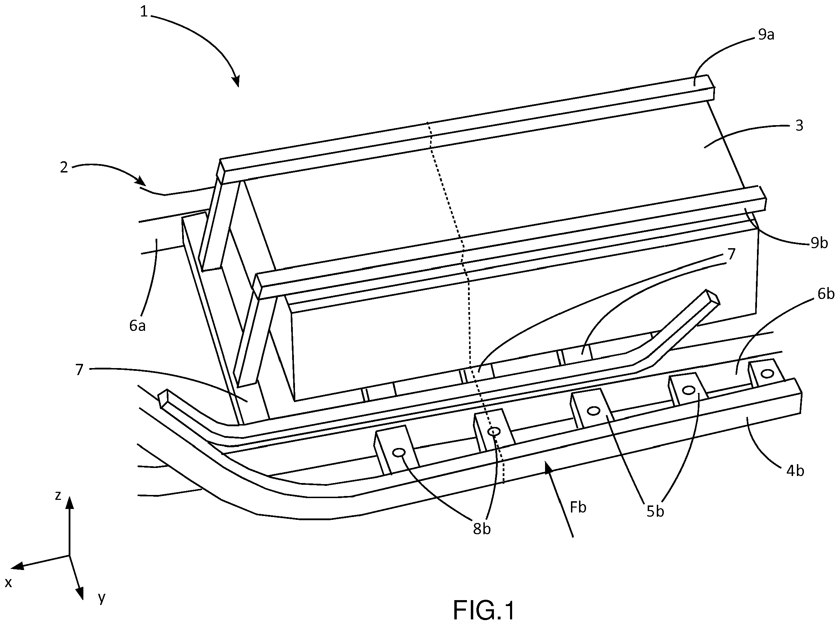

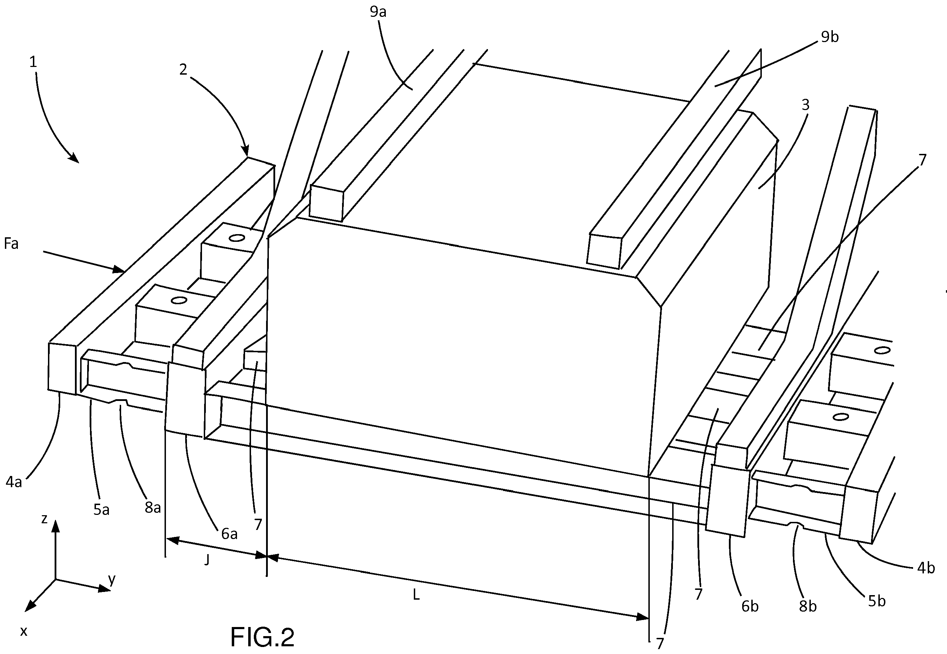

Un mode de réalisation de châssis de véhicule automobile 1 est décrit ci-après en référence aux figures 1 et 2.

Le châssis est en particulier un châssis de véhicule automobile électrique ou hybride, notamment un châssis de quadricycle électrique.

Le châssis comprend, de préférence dans sa partie médiane, une structure 2 destinée à recevoir une batterie électrique 3, notamment à recevoir une batterie électrique d'alimentation d'un moteur électrique d'entraînement du véhicule automobile.

Le châssis s'étend selon une direction longitudinale x, cette direction longitudinale étant celle de déplacement du véhicule en ligne droite. On note y, la direction transversale perpendiculaire à la direction longitudinale, et on note z, la direction verticale perpendiculaire aux deux précédentes.

La structure comprend :
- un élément rigide 7, 6a, 6b au-dessus duquel la batterie est destinée à être disposée ; et
- des éléments d'absorption d'énergie 4a, 5a, 4b, 5b disposés latéralement de part et d'autre de l'élément rigide.

De préférence, l'élément rigide comprend deux longerons 6a, 6b s'étendant au moins sensiblement parallèlement l'un à l'autre et s'étendant au moins sensiblement selon la direction longitudinale x. Ces longerons sont par exemple réalisés en profilés métalliques, notamment en aluminium ou en acier. Ces longerons peuvent être à section rectangulaire.

De préférence, l'élément rigide comprend des traverses reliant mécaniquement les deux longerons, par exemple quatre traverses 7 comme représenté sur les figures. Les traverses peuvent s'étendre au moins sensiblement selon la direction latérale y. Ces traverses sont par exemple réalisées en profilés métalliques, notamment en aluminium ou en acier. Elles peuvent être à section rectangulaire.

Par exemple, la hauteur des traverses est inférieure à celle des longerons. Ainsi, la face supérieure des traverses peut se trouver en retrait relativement à la face supérieure des longerons.

Les traverses peuvent être fixées aux longerons grâce à des goussets. Alternativement, elles peuvent être fixées aux longerons par soudure ou tout autre moyen de fixation.

De préférence, la longueur des traverses est supérieure à la largeur L de la batterie. Ainsi, la batterie peut être disposée sur les traverses entre les longerons. De préférence, comme représenté à la figure 2, il reste un jeu J, de part et d'autre de la batterie, entre la batterie et les extrémités des traverses ou entre la batterie et les extrémités de l'élément rigide.

De préférence, l'élément d'absorption d'énergie comprend deux poutres 4a, 4b, notamment des poutres de bavolet ou des bavolets, s'étendant au moins sensiblement parallèlement l'une à l'autre et s'étendant au moins sensiblement selon la direction longitudinale x. Ces poutres sont par exemple réalisées en profilés métalliques, notamment en aluminium ou en acier. Ces poutres peuvent être à section rectangulaire.

De préférence, l'élément d'absorption d'énergie comprend des organes déformables reliant mécaniquement l'élément rigide aux poutres, par exemple quatre organes déformables 5a, 5b comme représenté sur les figures. Les organes déformables 5a, 5b peuvent s'étendre au moins sensiblement selon la direction latérale y. Ces organes déformables sont par exemple réalisés en profilés métalliques, notamment en aluminium ou en acier ou en profilés en matériaux synthétiques. Ils peuvent être à section rectangulaire. Ils peuvent comprendre des moyens 8a, 8b favorisant ou guidant leur déformation. Ces moyens 8a, 8b sont par exemple des trous réalisés dans les organes. Les organes déformables ont de préférence des propriétés d'absorption importante d'énergie en cas de choc, en particulier en cas de choc latéral, c'est-à-dire en cas de choc dû à l'application brutale et latérale sur la structure d'une action mécanique Fa ou Fb, en particulier une action mécanique appliquée au moins sensiblement parallèlement à la direction transversale y.

Les organes déformables peuvent être fixés aux longerons et aux poutres par soudure ou tout autre moyen de fixation.

Par exemple, la hauteur des organes déformables est inférieure à celle des poutres et/ou la hauteur des organes déformables est inférieure à celle des longerons. Au moins certains éléments d'absorption d'énergie peuvent être disposés dans l'alignement des traverses. De préférence, tous les éléments d'absorption d'énergie sont disposés dans l'alignement des traverses.

Dans une variante, la structure peut comprendre des moyens de bridage (non représentés) de la batterie sur la structure. Par exemple, ces moyens de bridage peuvent être prévus sur des arceaux 9a et 9b, notamment des arceaux fixés sur l'élément rigide et/ou enjambant longitudinalement la batterie.

Dans tout ce document, on entend par « élément rigide » tout élément se déformant moins qu'un « élément d'absorption d'énergie » lors d'un choc sur la structure, en particulier lors d'un choc latéral, notamment lors d'un crash-test normalisé contre un poteau. De préférence, l'élément rigide ne se déforme pas lors d'un crash-test normalisé contre un poteau ou se déforme dans son domaine élastique lors du crash-test normalisé. A l'inverse, l'élément d'absorption d'énergie se déforme lors du crash-test normalisé contre un poteau. Il se déforme dans son domaine plastique. Ainsi, à l'issue du crash-test, l'élément d'absorption d'énergie demeure déformé alors que l'élément rigide a conservé ou a retrouvé sa forme initiale. L'élément d'absorption d'énergie est conçu pour absorber un maximum de l'énergie du choc.

Alternativement, l'élément rigide peut aussi se déformer dans le domaine plastique lors d'un crash-test normalisé. Cependant, il se déforme latéralement moins que l'élément d'absorption d'énergie. En particulier, il se déforme suffisamment peu pour que l'intégrité de la batterie soit assurée. Le jeu J précédemment mentionné est dimensionné à cette fin. Par ailleurs, lors d'un choc latéral, l'élément rigide n'est déformé dans son domaine plastique que lorsque l'élément d'absorption d'énergie est complètement déformé, notamment lorsqu'une poutre est en contact contre un longeron.

De préférence, l'élément rigide est caractérisé par une rigidité transversale supérieure à la rigidité transversale des éléments d'absorption d'énergie. Les rigidités transversales des éléments d'absorption d'énergie et des éléments rigides sont suffisamment différentes pour assurer que, lors d'un crash-test latéral normalisé, l'élément rigide ne se déforme pas ou se déforme dans son domaine élastique alors que, l'élément d'absorption d'énergie se déforme dans son domaine plastique. De préférence, l'élément rigide est au moins 1,2 fois plus raide que l'élément d'absorption d'énergie. Dans tous les cas, la rigidité de l'élément rigide permet de garantir l'intégrité du carter de la batterie 3 lors d'un crash-test latéral normalisé contre un poteau.

Dans le mode de réalisation décrit précédemment, l'élément rigide s'étend en dessous de la batterie. Cependant, dans un autre mode de réalisation non représenté, l'élément rigide peut alternativement ou complémentairement être agencé de sorte à s'étendre au-dessus de la batterie, lorsque celle-ci est mise en place dans la structure.

De préférence, la surface de la projection verticale de la batterie est incluse ou au moins sensiblement incluse dans la surface de la projection verticale de l'élément rigide. Par « surface de la projection verticale de l'élément rigide », on entend la surface enveloppe de la projection verticale. Ainsi, si l'élément d'absorption d'énergie est constitué par deux longerons parallèles reliés par deux traverses perpendiculaires aux longerons, alors la surface de la projection verticale est un rectangle dont les limites sont définies par les deux traverses et les deux longerons.

Un châssis de véhicule automobile peut comprendre l'un ou l'autre des modes de réalisation de structure décrits précédemment. Un tel châssis peut équiper un véhicule automobile, notamment un véhicule automobile électrique, par exemple un quadricycle électrique.

Grâce à l'invention, la structure présente un renforcement transversal continu du soubassement, répété ou non, garantissant une intégrité optimale de la batterie.

Les modes de réalisation de la structure décrits précédemment présentent des avantages :
- Lors de chocs de faible énergie, il est possible de réparer la structure : en effet, seules les poutres et les organes déformables sont alors endommagés et l'élément rigide est intact. Il suffit alors de remplacer la poutre endommagée et les organes déformables endommagés.
- La présence uniquement locale d'une structure rigide permet de réaliser une structure légère.

Dans tout ce texte, le terme « au moins sensiblement » utilisé avec différents *adjectifs* signifie : « *adjectif* » ou « sensiblement *adjectif* », par exemple « au moins sensiblement perpendiculaire » signifie « perpendiculaire » ou « sensiblement perpendiculaire ».

## Revendications

1. Structure (2) destinée à recevoir une batterie électrique (3) d'alimentation d'un moteur électrique d'un véhicule automobile, la structure **comprenant** un élément rigide (7, 6a, 6b) au-dessus et/ou au-dessous duquel la batterie est destinée à être disposée, l'élément rigide incluant plusieurs longerons (6a, 6b) du véhicule s'étendant longitudinalement au véhicule et reliés l'un à l'autre par plusieurs traverses (7), la structure étant **caractérisée en ce qu'**elle **comprend,** latéralement de part et d'autre des longerons, des éléments d'absorption d'énergie comprenant des organes déformables (5a, 5b) s'étendant au moins sensiblement selon une direction latérale, ainsi que deux poutres (4a, 4b) disposées au moins sensiblement longitudinalement de part et d'autre de l'élément rigide et des organes déformables, les organes déformables reliant mécaniquement les longerons aux poutres.

2. Structure selon la revendication précédente, **caractérisée en ce que** la surface de la projection verticale de la batterie est incluse ou au moins sensiblement incluse dans la surface de la projection verticale de l'élément rigide.

3. Châssis (1) de véhicule automobile comprenant une structure selon l'une des revendications précédentes.

4. Véhicule automobile hybride ou électrique, notamment quadricycle électrique, comprenant une structure selon l'une des revendications 1 ou 2 ou un châssis selon la revendication 3.

## Patentansprüche

1. Struktur (2) zum Halten einer Elektrobatterie (3) zur Stromversorgung eines Elektromotors eines Motorfahrzeugs, wobei die Struktur ein starres Element (7, 6a, 6b) umfasst, über und/oder unter dem die Batterie angeordnet werden soll, wobei das starre Element mehrere Längsträger (6a, 6b) des Fahrzeugs enthält, die sich in Längsrichtung des Fahrzeugs erstrecken und durch mehrere Querträger (7) miteinander verbunden sind, wobei die Struktur **dadurch gekennzeichnet ist, dass** sie lateral auf beiden Seiten der Längsträger Energieaufnahmeelemente, die verformbare Glieder (5a, 5b) umfassen, welche sich zumindest im Wesentlichen entlang einer lateralen Richtung erstrecken, sowie zwei Holme (4a, 4b), die zumindest im Wesentlichen in Längsrichtung auf beiden Seiten des starren Elements und der verformbaren Glieder angeordnet sind, umfasst, wobei die verformbaren Glieder die Längsträger mechanisch mit den Holmen verbinden.

2. Struktur nach dem vorhergehenden Anspruch, **dadurch gekennzeichnet, dass** die Fläche der vertikalen Projektion der Batterie in der Fläche der vertikalen Projektion des starren Elements enthalten oder im Wesentlichen enthalten ist.

3. Motorfahrzeugchassis (1), das eine Struktur nach einem der vorhergehenden Ansprüche umfasst.

4. Hybrid- oder Elektromotorfahrzeug, insbesondere vierrädriges Elektromotorfahrzeug, das eine Struktur nach Anspruch 1 oder 2 oder ein Chassis nach Anspruch 3 umfasst.

## Claims

1. Structure (2) intended to hold an electric battery (3) for powering an electric motor of a motor vehicle, the structure comprising a rigid element (7, 6a, 6b), above and/or below which the battery is intended to be arranged, the rigid element including a plurality of longitudinal members (6a, 6b) of the vehicle extending longitudinally to the vehicle and connected one to the other by a plurality of cross-members (7), the structure being **characterized in that** it comprises, arranged laterally to either side of the longitudinal members, energy absorbing elements comprising deformable members (5a, 5b) extending at least substantially in a lateral direction, and two beams (4a, 4b) arranged at least substantially longitudinally to either side of the rigid element and the deformable members, the deformable members connecting the longitudinal members mechanically to the beams.

2. Structure according to the preceding claim, **characterized in that** the surface of the vertical projection of the battery is included or at least substantially included in the surface of the vertical projection of the rigid element.

3. Frame (1) of a motor vehicle comprising a structure according to either of the preceding claims.

4. Hybrid or electric motor vehicle, in particular an electric quadricycle, comprising a structure according to either of Claims 1 and 2 or a frame according to Claim 3.
